# EUROPEAN PATENT APPLICATION

(11) **EP 2 012 510 A1**
(43) Date of publication of application: **07.01.2009**
(21) Application number: 08158794.1
(22) Date of filing: 23.06.2008
(51) Int. Cl.: H04M 1/2755, G06F 17/30

(54) **Method and apparatus for connecting a cellular telephone user to the internet**

(30) Priority: 24.06.2007 IL 18417907
(71) Applicant: xSights Media Ltd., 42505 Netania (IL)
(72) Inventor: Dariel, Eran, 44935, SDE WARBURG (IL)
(74) Representative: Modiano, Micaela Nadia

(57) **Abstract**

A portable communication apparatus is provided which comprises an image-capturing means for capturing an image; a character recognition means for recognizing characters which appear in that captured image; a location means for identifying the current location of the portable communication apparatus; a data retrieval means for accessing one or more databases in order to retrieve data based on the recognized characters and on the current location of the portable communication apparatus.

## Description

### Field of the Invention

The present invention relates to telecommunication apparatus and methods, in particular, to apparatus and methods adapted to allow provisioning of services via mobile telephone devices.

### Background of the Invention

Optical Character Reading, "OCR", is used nowadays extensively in various applications. To name but few, document scanning, license plate reading, identifying containers in sea ports, and many others.

Scanning a document is typically done under very controlled environment. However, doing so for a text written outdoors is somewhat more challenging, as mistakes can be made due to smeared text, poor lighting, etc.

One way of overcoming such mistakes and identify the characters comprised in the scanned text is based on a-priory knowledge of the text format. For example, a license plate has a certain pre-defined format (in some countries it is 7 numbers/letters, and the letters Q and O are not used). This way it is possible to check/confirm the OCR result by confirming that the process has not yielded a result (e.g. extracted text) that violates the *a-priory* information.

Currently, there is a fast growing use of mobile telephones that are provided with camera capabilities. One of the options that have been thought of in connection with such devices is to use the phone camera to capture an image that is presently viewed by the phone user, and retrieve further information which relates to the captured image.

The following references are brought as examples of solutions described in the prior art to the problem of improving the analysis of an image captured by a mobile phone to allow successful extraction of a processed image/text therefrom.

US 2004141644 discloses a portable communication apparatus that has a camera section for capturing an image and a character recognition section for recognizing characters from an captured image. A character-size adjustment indicator is provided on the display to provide a sufficiently high success rate in character recognition when at least one character included in the captured image fits into the reference frame.

US 2002055957 teaches a method for extracting a character string from an image photographed by a camera, and determining whether or not the extracted character string includes an address on a network. If in an address can thus be extracted from the image, the software provided allows accessing that address on the network.

US 2005286493 describes a method to allow retrieving information which relates to a certain address. By this publication, a mobile terminal is disclosed that includes a camera device and a controller. The camera device is configured to capture image data, and the controller is configured to recognize characters in the image data, and to generate the information that is to be communicated from the mobile terminal based on the recognized characters. The controller may determine that the recognized characters are indicative of an Internet address, a message address, a telephone number, a street address, and/or contact information.

US 2004260543 discloses a data selection mechanism for identifying a single data item from a plurality of data items. The data selection mechanism comprises a pattern matching mechanism for identifying candidate matching descriptor values that correspond to user-generated input, and a filter mechanism that is used for providing a filtered data set comprising the single data item. The pattern matching mechanism is operable to apply one or more pattern recognition models to the user-generated input and to generate hypothesised descriptor values for each of the pattern recognition models.

WO 06/119533 describes a method of accessing an electronic connection address using a mobile device and an interactive printed document that includes human-readable information and machine-readable coded data. The method comprising the steps of: sensing at least some of the coded data while the mobile device is used to physically interact with the printed document; sending, with the transceiver, the indicating data to a remote computer system; (c) receiving, with the transceiver, the electronic connection address in response to the indicating data; and (d) outputting the connection address in a human readable manner.

### Summary of the Invention

It is an object of the present invention to provide devices and methods to identify a text string with the help of information derived from knowing the neighborhood at which the text is located.

It is another object of the present invention to provide methods and means to add information derived from different sources to the process of identifying a text such as a business name, in order to increase the probability of properly identifying such a text.

It is another object of the present invention to allow provisioning of information to a user of a portable communication device about a business establishment located at his/her current vicinity with minimum efforts required from that user.

Other objects of the invention will become apparent as the description of the invention proceeds.

According to a first embodiment of the present invention, there is provided a portable communication apparatus comprising: an image-capturing means for capturing an image; a character recognition means for recognizing characters in the captured image; a location means for identifying current location of the portable communication apparatus; and a data retrieval means for accessing one or more databases for retrieving data based on the recognized characters and the location of the portable communication apparatus.

By yet another aspect of the present invention, there is provided a communication device comprising: a receiver adapted to receive an image captured by an image-capturing means of a portable communication apparatus; a character recognition means for recognizing characters from the received image; a location means for receiving data identifying current location of the portable communication apparatus; a data retrieval means for accessing one or more databases for retrieving data based on the recognized characters and on data identifying the location of said portable communication apparatus; and transmission means operative to forward information based on the retrieved data, towards the portable communication apparatus.

Preferably, the portable communication apparatus is be a cellular phone, a PDA and the like, while its image-capturing means comprising a phone camera.

According to a preferred embodiment of the invention, the location means are operative to receive location related data from a global positioning system (GPS) associated with the portable communication apparatus.

In accordance with still another embodiment of the invention, the location means are operative to receive location related data through a wireless communication network associated with the portable communication apparatus, e.g. a cell location as provided by the operator of the cellular network with which the portable communication device is associated. Location may also be extracted from WiFi hotspots, Cellbase triangulation, etc.

The term "location" as used herein and throughout the specification and claims, should not necessarily be understood as the portable communication apparatus exact geographical location, but also as will be appreciated by those skilled in the art, to encompass the current vicinity of the portable communication device. In addition, the resolution of the location related data may also be dependent upon the source providing that data.

By yet another embodiment, the data retrieved from the one or more databases based on the recognized characters and on the location of the portable communication apparatus location, comprises a name of a business establishment. Preferably, the data retrieved further comprises text that relates to that business establishment, or a design such as a logo that characterizes that business establishment.

According to another aspect of the invention, there is provided a method to enable identification of one or more strings of characters for a user of a portable communication device. The method comprises the steps of:
a. capturing an image which comprises the one or more strings of characters by an image-capturing means associated with the portable communication apparatus;
b. identifying at least one character out of the one or more strings of characters comprised in the captured image;
c. retrieving data that relates to the location of the portable communication device;
d. retrieving data from one or more databases based on the at least one identified character and the location related data; and
e. providing the user of the portable communication device, with information derived from the data retrieved.

According to a preferred embodiment of this aspect of the invention, the information provided to the user comprises a name of a business establishment.

In accordance with another preferred embodiment, the one or more strings of characters of the captured image comprise a business establishment name, and the one or more databases comprise a list of business establishments that includes business establishments located at the vicinity at which the portable communication device is currently located.

By yet another preferred embodiment, the step of retrieving data from one or more databases based on the at least one identified character and the location related data, comprises matching the at least one character identified out of the one or more strings of characters of the captured image, with the list of business establishments located at the current vicinity of the portable communication device.

Preferably, the information provided to the user includes a list comprising one or more names of business establishments located at the neighborhood at which the portable communication device is currently located, wherein the list of one or more names comprises only names which include the same at least one character out of the one or more strings of characters comprised in the captured image, that have already been identified.

By still another embodiment, the list of one or more names comprises only names which include the same at least one character identified out of the one or more strings of characters comprised in the captured image, and which has the same number of preceding characters. In other words, the names included in the list to be provided to the user, will include the already identified characters placed at the same place as though these characters are placed in the one or more strings, so that when counting from the beginning of the name, the number of characters preceding each of the identified characters is equal to the number of characters actually located between the beginning of the one or more strings of characters and the already identified at least one character.

### Brief description of the Drawings

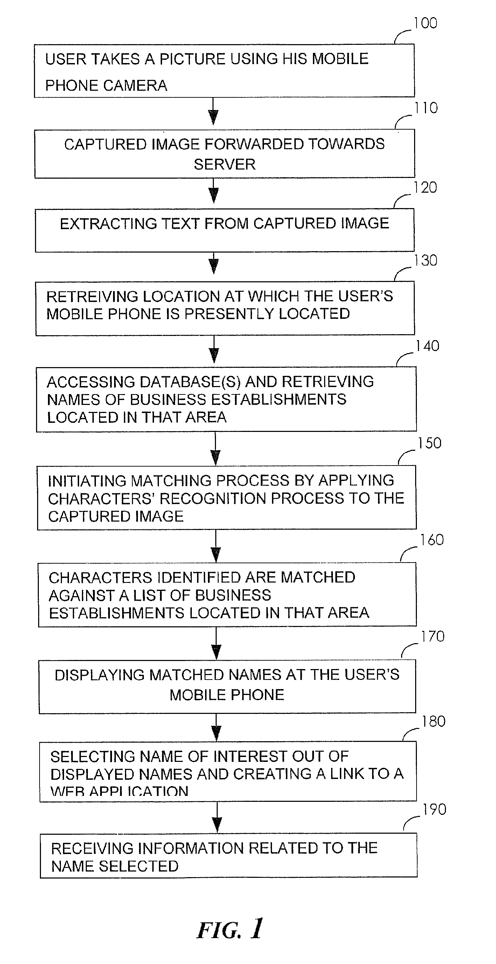

FIG. 1 - presents an example of carrying out the method according to an embodiment of the present invention.

### Detailed Description of the Invention

A better understanding of the present invention is obtained when the following non-limiting detailed description is considered in conjunction with the accompanying figure.

The following is an example of carrying out a method in accordance with an embodiment of the present invention, by which a camera included in a cellular phone is used as a query-input device to a visual-mobile search engine.

Let us assume that a user reaches a business establishment, say a restaurant, and he would like to receive some information about it, prior to entering the restaurant (if at all).

Therefore, according to an embodiment of the present invention, the user takes a picture of the restaurant name (100) by using his cellular phone camera, where the name may be either in the form of a logo or in the form of a text.

The captured image is forwarded towards a server (step 110) that extracts the text (step 120) from the captured photo. Typically, as the image is taken from a certain angle and the conditions at which the picture is taken are far from being perfect, the extracted text would comprise a number of errors, which in turn would prevent the user from accessing at this point of the process a data source such as the internet in order to retrieve useful information, unless of course the user inputs manually the name of the restaurant and initiates a search for this name. However, in order to avoid the need for the user to type in the restaurant name (which could be a cumbersome process itself), the next step (step 130) according to the present invention is to retrieve the restaurant location by retrieving the location at which the user's cellular phone is present. The location information can be achieved for example by knowing the cell at which the cellular telephone is operative, or preferably, by using the GPS location of the mobile telephone sending the photo. Once this location is known, a database such as the web Yellow-pages or Google maps, and the like are accessed and all registered business establishments that are found in that location (step 140) are retrieved. Next, either the user goes over the list to find the restaurant name or in the alternative, a matching process is initiated whereby a process of characters' recognition is applied on the captured image (step 150) and the characters identified are matched against the list of business establishments located at that vicinity (step 160) with a result of one or perhaps few business establishments which their names comprise the characters identified and which are also located at the vicinity of the mobile phone. The one or more names thus obtained may then be displayed at the user's mobile phone (step 170), and when the user selects the appropriate name of the restaurant he/she is interested in, a link is established with a web application (step 180). In return the user receives at his/her mobile phone requested information (e.g. a review) which relates to that restaurant (step 190).

Similarly, the above process may be used for other applications such as when the user takes a picture of a bus station, and based on the text information included in the picture processed in conjunction with the user's location, the system is able to provide the user with a time table of the buses that would stop in the station that was photographed by the user.

It is to be understood that the above description only includes some embodiments of the invention and serves for its illustration. Numerous other ways of carrying out the methods provided by the present invention may be devised by a person skilled in the art without departing from the scope of the invention, and are thus encompassed by the present invention.

For example, it should be clear to any person skilled in the art that the functionalities required to carry out the present invention may divided differently between the portable apparatus and the server. To name but few, the recognition of the different characters may be carried out either by the portable apparatus or in the alternative, the captured image can be sent to the server where the characters' recognition process can take place. Similarly, the retrieval of the portable apparatus location data can take place either by the portable apparatus or by the server, and so on. It should be understood that any such shifting a functionality from the portable apparatus to the server and vice versa, is a matter of simple selection and can be done without departing from the scope of the present invention.

## Claims

1. A portable communication apparatus comprising: an image-capturing means for capturing an image; a character recognition means for recognizing characters from said captured image; a location means for identifying current location of said portable communication apparatus; a data retrieval means for accessing one or more databases for retrieving data based on said recognized characters and on the location of said portable communication apparatus.

2. The portable communication apparatus according to claim 1, wherein said location means are operative to receive location related data from a global positioning system (GPS) associated with said portable communication apparatus.

3. The portable communication apparatus according to claim 1, wherein said location means are operative to receive location related data through a wireless communication network associated with said portable communication apparatus.

4. The portable communication apparatus according to claim 1, wherein data retrieved from said one or more databases based on said recognized characters and on the location of said portable communication apparatus location, comprises a name of a business establishment.

5. The portable communication apparatus according to claim 4, wherein the retrieved data comprises text that relates to said business establishment.

6. A communication device comprising: a receiver for receiving an image captured by an image-capturing means of a portable communication apparatus; a character recognition means for recognizing characters from said received image; a location means for receiving data identifying current location of said portable communication apparatus; a data retrieval means for accessing one or more databases for retrieving data based on the recognized characters and on data identifying the location of said portable communication apparatus; and transmission means operative to forward information based on said retrieved data towards said portable communication apparatus.

7. The communication device according to claim 6, wherein said location means are operative to receive location related data from a global positioning system (GPS) associated with said portable communication apparatus.

8. The communication device according to claim 6, wherein the data retrieved from said one or more databases, comprises a name of a business establishment.

9. The communication device according to claim 8, wherein the data retrieved further comprises text that relates to said business establishment.

10. A method to enable identification of one or more strings of characters for a user of a portable communication device, which method comprising:
a. capturing an image which comprises said one or more strings of characters by an image-capturing means associated with said portable communication apparatus;
b. identifying at least one character out of said one or more strings of characters comprised in the captured image;
c. retrieving data relating to the location of said portable communication device;
d. retrieving data from one or more databases based on the at least one identified character and on the location related data; and
e. providing the user of said portable communication device, with information derived from the data retrieved.

11. A method according to claim 10, wherein the information provided to the user comprises a name of a business establishment.

12. A method according to claim 11, wherein said one or more strings of characters of the captured image comprise a business establishment name and said one or more databases comprise list of business establishments which includes business establishments located at the vicinity at which said portable communication device is currently located.

13. A method according to claim 12, wherein the step of retrieving data from one or more databases based on the at least one identified character and on the location related data, comprises matching said at least one character out of said one or more strings of characters of the captured image with said list of business establishments located at the current vicinity of said portable communication.

14. A method according to claim 13, wherein the information provided to the user includes one or more names of business establishments located at the vicinity of the portable communication device, wherein said one or more names comprise only names which comprise the same at least one character identified out of the one or more strings of characters comprised in the captured image.

15. A method according to claim 14, wherein said one or more names comprise only names which include the same at least one character identified out of the one or more strings of characters comprised in the captured image and having the same number of preceding characters when counted from the beginning of the name as the number of characters located between the beginning of the one or more strings of characters and the already identified at least one character.
